# NOUVEAU FASCICULE DE BREVET EUROPEEN

(11) **EP 2 048 576 B2**
(45) Date de publication et mention de la décision concernant l'opposition: **07.01.2015**
(45) Mention de la délivrance du brevet: 11.08.2010
(21) Numéro de dépôt: 08166029.2
(22) Date de dépôt: 07.10.2008
(51) Int. Cl.: G06F 9/445

(54) **Procédé de mise à jour sécurisée d'un programme à lancement automatique et entité électronique portable le mettant en oeuvre**
Verfahren zur gesicherten Aktualisierung eines automatisch startenden Programms und tragbare elektronische Einheit zu dessen Ingangsetzung
Secure method for updating a program that runs automatically and portable electronic device implementing same

(30) Priorité: 10.10.2007 FR 0758201
(43) Date de publication de la demande: 15.04.2009
(73) Titulaire: OBERTHUR TECHNOLOGIES, 92300 Levallois-Perret (FR)
(72) Inventeur: Jayet, Stéphane, 69330 MEYZIEU (FR); Chamley, Olivier, 33850 LEOGNAN (FR)
(74) Mandataire: Santarelli

(56) Documents cités:
- WO-A-2007/109189
- CN-A- 101 043 404
- US-A1- 2002 078 367
- US-A1- 2005 083 741
- US-A1- 2006 218 549
- BEN GOTTESMAN: 'U3' PCMAG.COM, [en ligne] 21 Septembre 2005, Extrait de l'Internet: <URL:HTTP://WWW.PCMAG.COM/PRINT_ARTICLE2/0, 1217,A=160609,00.ASP?HIDPRINT=TRUE>
- MALTE JESCHKE: 'U3-konforme USB-Sticks', 09 Août 2006, TECCHANNEL.DE
- PHIL ZIMMERMANN: 'AN INTRODUCTION TO CRYPTOGRAPHY. CHAPTER 1', 1998 Bd. 'THE BASICS OF CRYPTOGRAPHY', pages I - X, 11 - 28

## Description

La présente invention concerne un procédé de mise à jour sécurisée d'un programme à lancement automatique (en anglais « autorun ») et une entité électronique portable le mettant en oeuvre ». Le terme d'entité électronique portable recouvre aussi les entités électroniques « de poche ». Il s'agit préférentiellement d'une clef électronique dite « USB » (acronyme de « Universal Serial Bus » pour bus série universel), c'est-à-dire une clef dont l'interface physique avec une station hôte est conforme à la spécification USB, et apte à communiquer selon un protocole conforme à la spécification USB. Il peut également s'agir d'une carte à microcircuit de type carte à puce ou de type carte à mémoire flash.

Le document US/2005083741 décrit une clef USB comportant un programme autorun. Le lancement de cette fonctionnalité est protégé par un mot de passe ou par des moyens cryptographiques. Cependant, ce document ne décrit aucun moyen pour modifier ce programme autorun.

Pour remédier à ces inconvénients, l'invention vise, selon un premier aspect, une entité électronique portable, caractérisée en ce qu'elle comporte :
- des moyens pour réaliser une connexion de ladite entité à une station hôte,
- une mémoire conservant un programme apte à être exécuté automatiquement, sur ladite station hôte, sur connexion de ladite entité à ladite station hôte et
- des moyens sécurisés pour modifier ledit programme.

Grâce à ces dispositions, on peut modifier le programme autorun sur l'entité électronique portable durant sa vie, de façon sécurisée.

Selon des caractéristiques particulières, les moyens pour réaliser une connexion sont adaptés à provoquer une première énumération sur connexion de ladite entité à ladite station hôte, au cours de laquelle ladite entité s'identifie et émule un lecteur de mémoire morte dans laquelle se trouve le fichier dudit programme et les moyens sécurisés sont adaptés, pour modifier ledit programme, à provoquer l'arrêt de fonctionnement de l'entité et à provoquer une deuxième énumération, au cours de laquelle ladite entité s'identifie et émule un lecteur de mémoire non volatile réinscriptible dans laquelle se trouve le fichier dudit programme.

Selon des caractéristiques particulières, les moyens sécurisés sont adaptés, pour modifier ledit programme, à provoquer l'arrêt de fonctionnement de l'entité et son redémarrage avant de provoquer la deuxième énumération.

Selon des caractéristiques particulières, les moyens sécurisés sont adaptés à inscrire, dans une zone de mémoire réservée de ladite entité, une instruction provoquant l'identification de ladite entité à une mémoire non volatile réinscriptible lors du prochain démarrage de ladite entité.

Grâce à chacune de ces dispositions, l'entité électronique portable objet de la présente invention est compatible avec les stations hôtes qui ne supporteraient pas la ré-énumération de l'entité électronique portable qui leur est connectée. De plus, chacune de ces dispositions permet de réaliser simplement l'entité électronique portable objet de la présente invention.

Selon des caractéristiques particulières, les moyens pour réaliser une connexion sont adaptés à provoquer une première énumération au cours de laquelle ladite entité s'identifie à un lecteur de CD-ROM.

Selon des caractéristiques particulières, les moyens sécurisés sont adaptés à provoquer une deuxième énumération au cours de laquelle ladite entité s'identifie à un lecteur de mémoire flash USB.

La présente invention s'applique ainsi aux clefs USB.

Selon des caractéristiques particulières, les moyens sécurisés comportent des moyens d'authentification d'une version modifiée dudit programme.

Selon des caractéristiques particulières, les moyens sécurisés comportent des moyens de vérification d'une signature d'une version modifiée dudit programme.

Grâce à ces dispositions, on vérifie l'identité de l'émetteur de la mise à jour, avant d'effectuer cette mise-à-jour.

Selon des caractéristiques particulières, les moyens sécurisés comportent des moyens de déchiffrement d'une version modifiée dudit programme.

Grâce à ces dispositions, on augmente la sécurité pour la mise-à-jour du programme.

Selon des caractéristiques particulières, l'entité électronique portable telle que succinctement exposé ci-dessus comporte une zone de mémoire conservant une clef cryptographique et en ce que les moyens sécurisés pour modifier au moins un dit programme mettent en oeuvre une clef cryptographique correspondant à ladite clef cryptographique mémorisée.

La sécurité est ainsi particulièrement forte.

Selon des caractéristiques particulières, le programme apte à être exécuté automatiquement comporte des moyens d'accès à un serveur distant.

Grâce à ces dispositions, la mise à jour est effectuée sur un seul support physique.

Selon des caractéristiques particulières, l'entité électronique portable telle que succinctement exposée ci-dessus comporte une interface physique avec la station hôte conforme à la spécification USB, et est apte à communiquer avec la station hôte selon un protocole conforme à la spécification USB pour obtenir des données de modification dudit programme.

La présente invention s'applique ainsi aux clefs USB.

Selon un deuxième aspect, la présente invention vise un procédé de mise à jour d'un programme à lancement automatique d'une entité électronique portable, caractérisé en ce qu'il comporte :
- une étape de connexion de ladite entité à une station hôte,
- une étape d'exécution, sur ladite station hôte d'un programme conservé par ladite entité et apte à être exécuté automatiquement, sur ladite station hôte, sur connexion de ladite entité à ladite station hôte et
- une étape de modification sécurisée dudit programme.

Selon un troisième aspect, la présente invention vise un programme à lancement automatique d'une entité électronique portable, caractérisé en ce qu'il comporte des instructions pour l'implémentation du procédé objet de la présente invention, tel que succinctement exposé ci-dessus.

Les avantages, buts et caractéristiques particulières de ce procédé et de ce programme étant similaires à ceux de l'entité électronique portable objet de la présente invention, telle que succinctement exposée ci-dessus, ils ne sont pas rappelés ici.

D'autres avantages, buts et caractéristiques de la présente invention ressortiront de la description qui va suivre, faite, dans un but explicatif et nullement limitatif, en regard des dessins annexés, dans lesquels :
- la figure 1 représente, schématiquement, un premier mode de réalisation de l'entité électronique portable objet de la présente invention,
- les figures 2A et 2B représentent, schématiquement, sous forme d'un logigramme, des étapes implémentant un premier mode de réalisation du procédé objet de la présente invention, avec l'entité décrite en figure 1,
- la figure 2C représente, schématiquement, sous forme d'un logigramme, des étapes implémentant un deuxième mode de réalisation du procédé objet de la présente invention, avec l'entité décrite en figure 1,
- les figures 3A et 3B représentent, schématiquement, sous forme d'un logigramme, des étapes implémentant un troisième mode de réalisation du procédé objet de la présente invention, avec l'entité décrite en figure 1 et
- la figure 4 représente, schématiquement, un deuxième mode de réalisation de l'entité électronique portable objet de la présente invention.

Dans toute la description, on utilise indifféremment les termes d' « encryption » et de « chiffrement », d'une part, et les termes de « décryptage » et de « déchiffrement », d'autre part.

Dans toute la description, on utilise indifféremment les termes de « entité électronique portable », « dispositif » ou « périphérique » pour désigner l'entité électronique portable objet de la présente invention ».

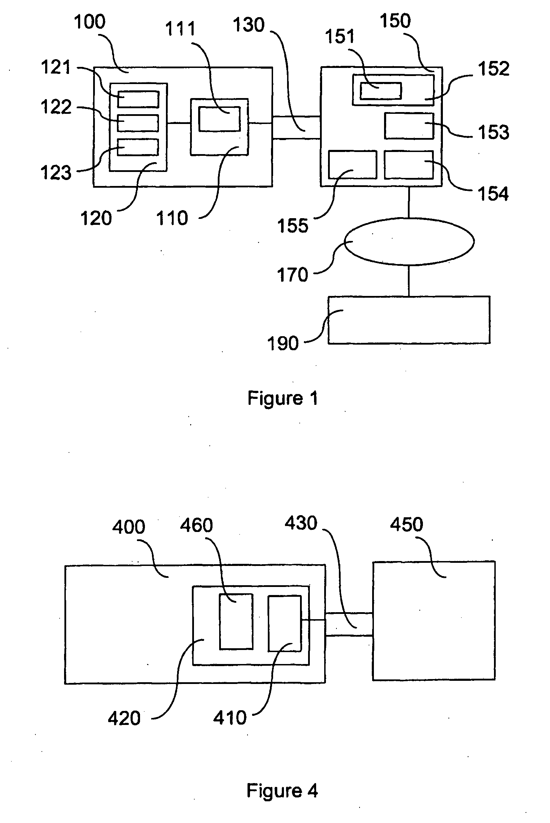

On observe, en figure 1, une entité électronique portable 100, une station hôte 150, un réseau de communication à distance 170 et une station distante 190. L'entité électronique portable 100 est, ici, une clef USB. Dans d'autres modes de réalisation (non représentés) l'entité électronique portable implémentant la présente invention est une carte à mémoire ou une carte SIM (acronyme de « subscriber identification module » pour module d'identification de souscripteur).

La station hôte 150 est, par exemple, un ordinateur personnel ou un téléphone mobile. La station hôte 150 comporte une mémoire 152, une unité de traitement 153, un écran 154 et un clavier 155. Le réseau de communication à distance 170 est, par exemple, le réseau Internet ou un réseau de télécommunication mobile. La station distante 190 est, par exemple, un serveur.

L'entité électronique portable 100 comporte une interface 130, ici une interface USB avec la station hôte 150, c'est-à-dire implémentant le protocole USB, et un contrôleur 110 d'une mémoire non volatile réinscriptible 120. L'interface USB 130 sert, notamment, à obtenir des données de modification du programme 121 décrit plus loin. Le contrôleur 110 comporte une mémoire non volatile réinscriptible conservant un programme de pilotage 111 du contrôleur 110. Chacune de ces mémoires non volatiles réinscriptibles est, par exemple de type EEPROM (acronyme de Electrically-Erasable Programmable Read-Only Memory ou mémoire morte effaçable électriquement et programmable) ou de type EPROM (acronyme de Erasable Programmable Read-Only Memory ou mémoire morte effaçable et programmable).

La mémoire 120 conserve un programme à lancement automatique « autorun » 121, une mémoire 122 interdite à la lecture depuis l'extérieur de l'entité et comportant une clef cryptographique K2, et une mémoire 123 réservée pour des données d'initialisation et/ou de mot de passe destinés au programme de pilotage 121. Le programme autorun 121 est mémorisé crypté avec la clef K2 dans la mémoire 122.

Le programme d'ordinateur objet de la présente invention peut être embarqué dans une mémoire de diverses configurations de dispositifs pour fournir une grande variété de périphériques USB avec des fonctionnalités lors des démarrages automatiques qui peuvent être mises à jour. Par exemple, le dispositif comporte un « hub » par l'intermédiaire duquel un microcontrôleur communique avec un composant de mémoire interne non volatile réinscriptible comportant ledit programme autorun. Dans un autre exemple, le dispositif comporte un microcontrôleur USB connecté à un composant de mémoire externe non volatile réinscriptible, par l'intermédiaire d'un port aval. Le programme autorun peut être conservé dans la mémoire du microcontrôleur ou dans un composant de mémoire interne, ce deuxième cas étant représenté en figure 1.

Dans une autre configuration, le dispositif objet de la présente invention forme un périphérique USB qui possède de multiples fonctionnalités. Ce périphérique USB comporte, d'une part, un microprocesseur interne avec une interface USB, et d'autre part, un composant de mémoire non volatile réinscriptible et un matériel de communication sans fil, par exemple conforme à la norme Bluetooth ou la norme ISO 14443 ou la norme NFC. Ce périphérique est ainsi capable de communiquer comme un dispositif de communication sans fil, comme un « dongle » ou comme une mémoire flash USB, chacune de ces fonctionnalités étant accessible ou configurable grâce au programme de lancement automatique, ou « autorun ».

On rappelle ici qu'un dongle est un composant matériel se branchant sur les ordinateurs, généralement sur un port d'entrées-sorties. Dans les années 1980, ce terme désignait des matériels destinés à valider le droit d'utiliser un logiciel, remplissant le rôle de « verrous matériels ». Actuellement, ce terme peut désigner toutes sortes de matériels comme des périphériques de stockage (clés USB), des clés permettant de se connecter à un réseau Wi-Fi, bluetooth ou infrarouge, ou encore de recevoir la télévision numérique terrestre.

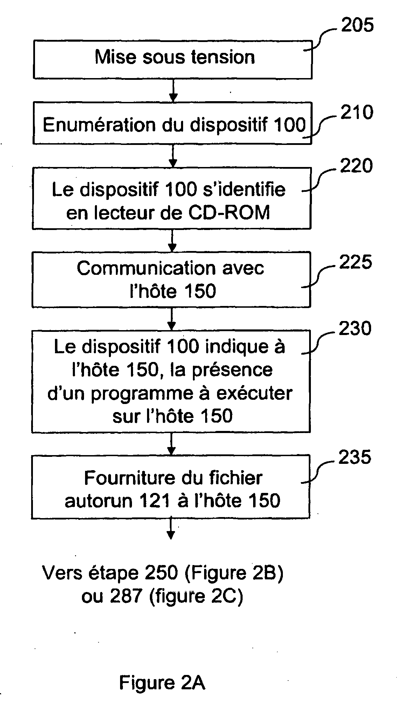

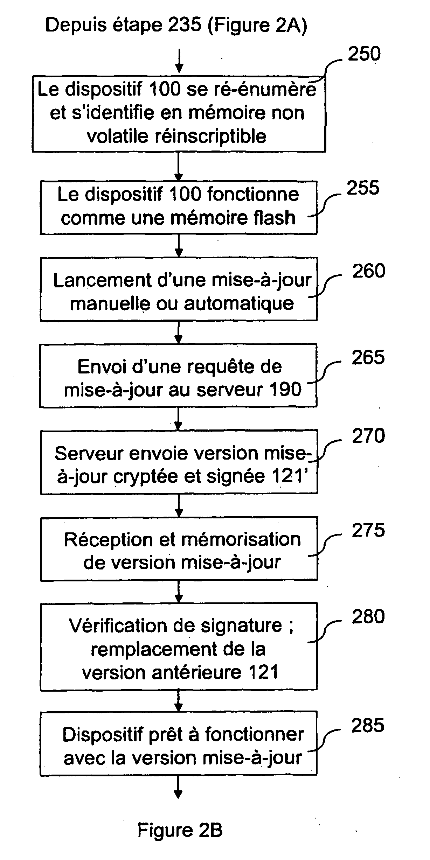

Comme on l'observe en regard des figures 2A et 2B, le logigramme d'un premier mode de réalisation du procédé objet de la présente invention comporte une étape 205 au cours de laquelle un périphérique 100 est inséré ou connecté à un port USB d'une station hôte 150, par exemple un ordinateur personnel.

Au cours d'une étape 210, la station hôte 150 effectue une énumération pour identifier les périphériques USB nouvellement connectés. On rappelle ici que le terme "énumération" désigne un processus USB par lequel le système identifie et configure le périphérique en lui donnant une adresse unique. C'est une gestion dynamique de la connexion et de la déconnexion des périphériques reliés à un bus USB. Cette phase d'énumération se produit lors de chaque connexion de périphérique. Lors de cette phase, le contrôleur 110, fonctionnant avec le programme de pilotage 111, fournit à l'hôte une suite de descripteurs qui permettent son identification complète. L'hôte assigne une adresse unique au périphérique (adressage dynamique) et configure le périphérique.

Au cours de l'étape 220, le programme de pilotage 111 du périphérique USB s'annonce lui-même avec une description d'interface de dispositif. Par exemple, la description d'interface de dispositif comporte une classe de mémoire de masse (en anglais "Mass Storage Class") transparent pour le jeu d'instructions SCSI (acronyme de « small computer system interface » pour interface système de petit ordinateur).

Dans le premier mode de réalisation, au cours de l'étape 220, le contrôleur 110 fonctionnant avec le programme de pilotage 111 décrit le périphérique 100 comme un lecteur de CD-ROM (acronyme de « compact disc - read only memory » pour disque compact - mémoire morte) en décrivant une classe de mémoire de masse dite « Bulk Only Transport » correspondant à un CD-ROM et émule le fonctionnement d'un tel lecteur.

Au cours d'une étape 225, l'hôte et le périphérique USB communiquent entre eux en utilisant, par exemple, un jeu d'instructions du standard MMC-2 (acronyme de « multimedia card » pour carte multimédia). Cette communication comporte une réponse à des requêtes de l'hôte par le programme de pilotage 111 selon la spécification MMC-2, y compris l'énumération des fichiers et sous-répertoires dans le répertoire racine du dispositif USB.

Au cours d'une étape 230, le contrôleur 110 fonctionnant avec le programme de pilotage 111 informe la station hôte 150 de la présence d'un fichier de programme exécutable autorun 121 à exécuter sur la station hôte 150. Puis, au cours d'une étape 235, le programme de pilotage 111 accède à la clef K2, décrypte le fichier de programme autorun 121 et fournit le fichier de programme autorun 121 décrypté à l'hôte 150. Par exemple, le fichier 121 peut être nommé "Autorun.inf," et peut être conservé dans le composant de mémoire 120 du dispositif ou périphérique USB. L'hôte 150 exécute le fichier de programme exécutable autorun 121. C'est ainsi que l'on a une fonctionnalité à démarrage automatique autorun.

Au cours de l'étape 250, le programme de pilotage 111 ré-énumère ou s'identifie comme un autre dispositif USB à mémoire non volatile réinscriptible, tel qu'une mémoire flash USB, qui permet d'accéder, en écriture, au fichier de programme autorun 121. Avec une telle ré-énumération, le programme de pilotage 111 s'identifie lui-même avec des descripteurs d'interface matérielle pour les autres dispositifs USB que le contrôleur 110 émule. Dans ce mode de réalisation, le contrôleur 110 émule simultanément un lecteur de CD-ROM et une mémoire flash USB, cette dernière émulation permettant l'écriture dans la mémoire du dispositif 100.

A partir d'une étape 255, le dispositif 100 fonctionne comme une mémoire USB-flash. Puis, au cours d'une étape 260, le programme autorun 121, copié sur la station hôte 150 et en cours d'exécution, fournit une interface homme-machine qui permet à l'utilisateur de la station hôte 150 de lancer une étape de mise à jour du fichier autorun 121 dans la clef USB 100. En variante, au cours de l'étape 260, le programme autorun 121 copié sur la station hôte 150 effectue un lancement périodique d'une étape de mise-à-jour du programme autorun 121.

A la suite du lancement de la mise-à-jour, au cours d'une étape 265, le programme autorun 121 envoie une requête de mise-à-jour à un serveur 190, par l'intermédiaire du réseau 170. Cette requête comporte un numéro de série et la version du programme autorun 121, ce numéro de série faisant partie du code exécutable du programme autorun 121. Au cours d'une étape 270, le serveur 190 reçoit la requête, vérifie si les droits associés au numéro de série l'autorisent à envoyer une nouvelle version. Si c'est le cas, le serveur 190 envoie au programme autorun 121 copié sur la station hôte 150, une version 121' du fichier du programme autorun 121. Cette version 121' est une version mise-à-jour cryptée et signée avec une clef K1, correspondant à la clef de décryptage K2, la clef K1 étant obtenue à partir du numéro de série et, préférentiellement, à partir d'une clef maître.

Au cours d'une étape 275, le programme autorun 121 en cours d'exécution sur la station 150 par l'unité de traitement 153, reçoit sa nouvelle version, sous forme du fichier du programme autorun 121', et envoie une commande d'écriture au programme de pilotage 111 conservé par la clef 100, pour écrire le fichier mis-à-jour 121' dans la zone mémoire de la clef USB comportant le fichier 121, le contrôleur 110 émulant ici une mémoire flash USB.

Au cours d'une étape 280, le programme de pilotage 111 vérifie l'authenticité de la version mise à jour 121'. Par exemple, le programme de pilotage vérifie, soit avec la clef K2 soit avec une autre clef, la signature cryptographique accompagnant la version mise-à-jour 121' et, en cas de vérification positive, copie cette version mise-à-jour 121' à la place du fichier 121.

A partir de l'étape 285, la clef USB 100 est prête à fonctionner avec la nouvelle version du fichier autorun 121'.

On observe que, dans le mode de réalisation exposé ci-dessus, le programme autorun 121 et sa version mise-à-jour 121' sont conservés en mémoire du dispositif 100 sous une forme chiffrée, un déchiffrement ayant lieu à chaque copie de ce programme en mémoire de la station hôte 150. En variante, le programme autorun 121 et sa version mise-à-jour 121' sont conservés en mémoire du dispositif 100 sous une forme déchiffrée, un seul déchiffrement ayant lieu avant mémorisation.

Préférentiellement, le programme de pilotage 111 ne donne pas accès en écriture à l'espace mémoire de la clef 100 où est conservé le fichier autorun 121 au moment de la mise sous tension de la clef 100, étapes 210 et 220. Ainsi, le fichier autorun 121 n'est accessible qu'en lecture lors de la mise sous tension de la clef.

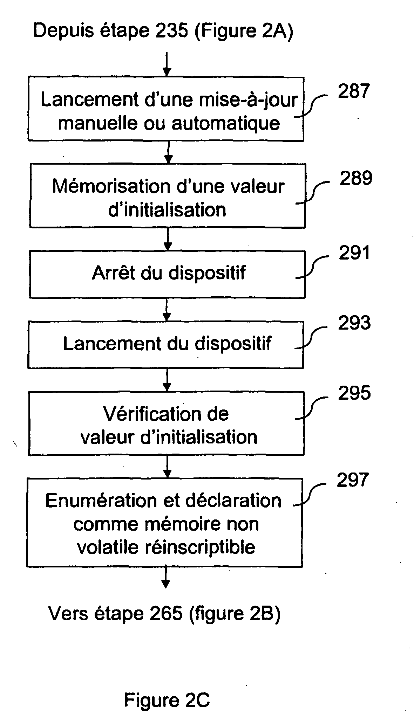

Comme illustré en figure 2C, dans un deuxième mode de réalisation du procédé objet de la présente invention, à la suite des étapes 205 à 235 (figure 2A), on effectue une étape 287 identique à l'étape 260. Au cours d'étape 289, avant d'entamer la mise à jour du programme 121, on écrit, dans la mémoire non volatile réinscriptible du contrôleur 110, une valeur d'initialisation prédéterminée dans une zone de mémoire que le programme de pilotage 111 lit lors de son lancement, avant l'énumération. Cette valeur d'initialisation signifie que, lors du prochain démarrage du dispositif, celui-ci devra s'identifier comme une mémoire non volatile réinscriptible, par exemple une mémoire USB flash, et non comme un lecteur de CD-ROM.

Puis, au cours d'une étape 291, le programme autorun 121, exécuté sur la station hôte 150, commande l'arrêt du dispositif 100. Au cours d'une étape 293, le programme autorun 121 exécuté sur la station hôte 150 commande le redémarrage (comme si la mise sous tension était effectuée de nouveau) du dispositif 100.

Au cours d'une étape 295, le programme de pilotage 111 exécuté par le contrôleur 110 lit la valeur prédéterminée et la vérifie. Au cours d'une étape 297, le dispositif 100 s'énumère et ne s'identifie alors pas comme un CD-ROM mais comme une mémoire flash USB. Puis on passe aux étapes 265 à 285 (figure 2B).

On note que ce deuxième mode de réalisation, illustré en figure 2C, est nécessaire pour les systèmes d'exploitation de stations hôtes 150 qui ne supportent pas la modification et/ou la ré-énumération d'un périphérique USB de type CD-ROM.

En variante, l'identification comme mémoire flash (« USB flash drive ») peut être remplacée par une identification d'un autre type de mémoire de masse supportant des commandes d'écriture, par exemple une mémoire externe sur support magnétique.

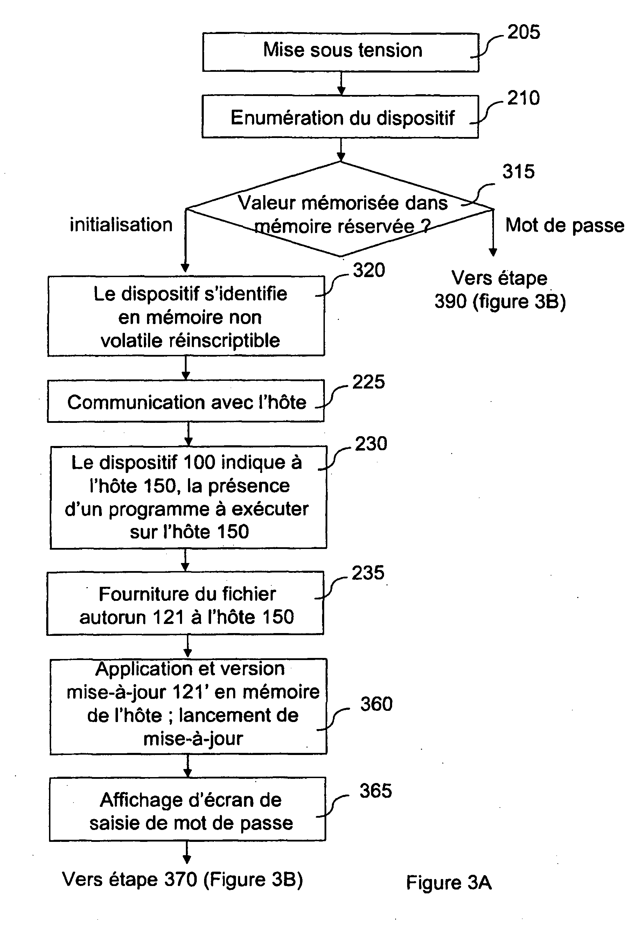

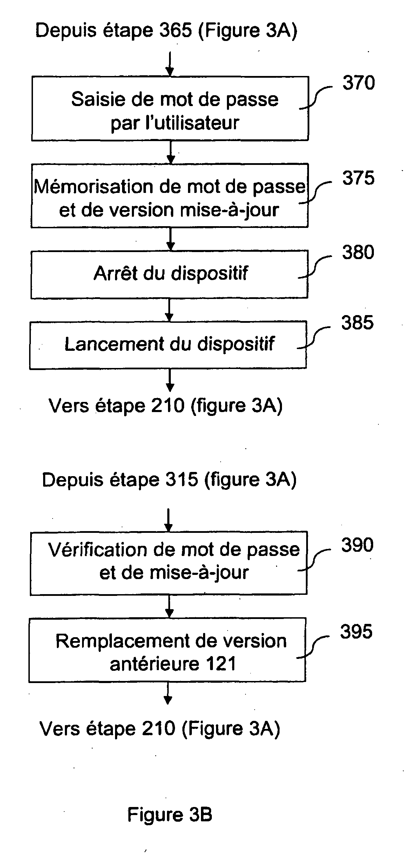

Comme on l'observe en regard des figures 3A et 3B, le logigramme d'un troisième mode de réalisation du procédé objet de la présente invention comporte les étapes 205 à 235 décrites en regard de la figure 2A, à ceci près que, à la suite de l'étape 210, au cours d'une étape 315, le contrôleur 110 exécutant le programme de pilotage 111, détermine si une zone de mémoire réservée comporte une valeur d'initialisation prédéterminée (ou valeur par défaut) ou un mot de passe. Si c'est une valeur d'initialisation, on passe à l'étape 320 au cours de laquelle, le dispositif 100 s'énumère et s'identifie à une mémoire non volatile réinscriptible, par exemple USB flash. Si c'est un mot de passe, on passe à l'étape 390.

On suppose ici que, au cours d'une étape 360, la station hôte 150 conserve en mémoire une application informatique 151 lancée par l'utilisateur et une nouvelle version 121' du fichier autorun 121. Par l'intermédiaire de l'application 151, au cours de l'étape 360, l'utilisateur lance une mise-à-jour du fichier autorun 121 pour le remplacer par sa nouvelle version 121'.

Au cours d'une étape 365, l'application 151 lit, par l'intermédiaire d'une instruction de lecture au programme de pilotage 111 du contrôleur 110, la version du programme autorun 121 et détermine si cette version est différente de la version du programme autorun 121'. Si oui, le programme 151 lance une mise à jour du fichier du programme autorun 121 et, à cet effet, affiche, sur l'écran d'affichage de la station hôte 150, une interface de saisie d'un mot de passe. Au cours d'une étape 370 (figure 3B), l'utilisateur saisit un mot de passe avec le clavier de la station hôte 150.

Puis, au cours d'une étape 375, l'application 151 envoie une requête d'écriture au programme de pilotage 111, en tant qu'émulateur d'USB flash drive, pour que le programme de pilotage 111 écrive, dans la mémoire 120, d'une part, le mot de passe, dans la zone réservée au mot de passe et, d'autre part, la version mise-à-jour 121', dans une autre zone réservée.

Au cours d'une étape 380, l'application 151 arrête le fonctionnement du dispositif 100. Au cours d'une étape 385, l'application 151 redémarre le dispositif 100, par exemple en le remettant sous tension. Le programme de pilotage 111 est alors lancé au cours de l'étape 210, lit la valeur d'initialisation prédéterminée dans la zone de mémoire réservée et, à la suite de l'étape 315, passe à l'étape 390 puisqu'un mot de passe est mémorisée dans la zone de mémoire réservée.

Au cours d'une étape 390, le programme de pilotage 111 détermine si la valeur mémorisée dans la zone mémoire réservée au mot de passe de la mémoire 120 correspond à un mot de passe mémorisé dans la zone mémoire 122. Le terme de « correspond » peut, par exemple, indiquer une simple égalité ou une égalité après cryptage ou décryptage avec la clef de cryptographie K2.

Si les mots de passe ne correspondent pas, on met la clef hors service, en écrivant, par exemple, une valeur dans une zone mémoire du contrôleur 110 réservée à cet effet. Si les mots de passe correspondent, au cours d'une étape 395, le programme de pilotage 111 copie la version mise-à-jour 121' mémorisée dans une zone mémoire réservée, à la place de la précédente version du fichier autorun 121 et copie la valeur prédéterminée d'initialisation dans la zone réservée pour le mot de passe.

A partir de l'étape 395, la clef USB 100 est prête à fonctionner avec la nouvelle version du fichier autorun 121' et passe à l'étape 210, (figure 3A).

On observe, en figure 4, une entité électronique portable 400, ici sous la forme d'une clef USB. Dans d'autres modes de réalisation (non représentés) l'entité électronique portable implémentant la présente invention est une carte à mémoire ou une carte SIM.

Une station hôte 450, par exemple un ordinateur personnel ou un téléphone mobile est adaptée à recevoir la clef USB 400 dans un port USB (non représenté).

L'entité électronique portable 400 comporte une interface 430, ici une interface USB et une mémoire non volatile réinscriptible 420. Cette mémoire non volatile réinscriptible 420 est, par exemple de type EEPROM ou de type EPROM. Cette mémoire 420 conserve un programme 410 et un fichier autorun 460 qui comporte un appel au programme 410. Le fichier autorun 460 se charge donc et s'exécute sur la station hôte 450 dès l'insertion de la clef USB dans le port USB de cette station hôte 450.

Ce deuxième mode de réalisation particulier de l'entité électronique portable objet de la présente invention peut, en outre, présenter les mêmes fonctionnalités que le premier mode de réalisation, exposé ci-dessus.

Au sens de la présente invention, un programme apte à être exécuté automatiquement sur la station hôte 450, sur connexion de l'entité électronique portable 400 à la station hôte 450, englobe aussi bien un programme exécuté automatiquement directement qu'un programme exécuté automatiquement indirectement du fait de l'exécution d'un autre fichier, comme illustré en figure 4.

## Revendications

1. Entité électronique portable (100), **caractérisée en ce qu'**elle comporte :
- des moyens (130) pour réaliser une connexion de ladite entité à une station hôte (150),
- une mémoire (120) conservant un programme (121) apte à être exécuté automatiquement, sur ladite station hôte, sur connexion de ladite entité à ladite station hôte et
- des moyens sécurisés (110, 111, 122, 123, 190) pour modifier ledit programme,
les moyens (130) pour réaliser une connexion étant adaptés à provoquer une première énumération (210, 220) sur connexion de ladite entité à ladite station hôte (150), au cours de laquelle ladite entité s'identifie et émule un lecteur de mémoire morte dans laquelle se trouve le fichier (121) dudit programme et les moyens sécurisés (110, 111, 122, 123, 190) sont adaptés, pour modifier ledit programme, à provoquer une deuxième énumération (210, 220, 250, 297), au cours de laquelle ladite entité s'identifie et émule un lecteur de mémoire non volatile réinscriptible dans laquelle se trouve le fichier dudit programme.

2. Entité électronique portable (100) selon la revendication 1, **caractérisée en ce que** les moyens sécurisés (110, 111, 122, 123, 190) sont adaptés, pour modifier ledit programme, à provoquer l'arrêt de fonctionnement (291, 380) de l'entité et son redémarrage avant de provoquer la deuxième énumération (210, 220, 250, 297).

3. Entité électronique portable (100) selon la revendication 2, **caractérisée en ce que** les moyens sécurisés (110, 111, 122, 123, 190) sont adaptés à inscrire (289, 375), dans une zone de mémoire (123) réservée de ladite entité, une instruction provoquant l'identification (295, 297, 315, 395) de ladite entité à une mémoire non volatile réinscriptible lors du redémarrage (205, 293, 385) de ladite entité.

4. Entité électronique portable (100) selon l'une quelconque des revendications 1 à 3, **caractérisée en ce que** les moyens sécurisés (110, 111, 122, 123, 190) comportent des moyens d'authentification (110, 111, 122, 280) d'une version modifiée dudit programme.

5. Entité électronique portable (100) selon la revendication 4, **caractérisée en ce qu'**elle comporte une zone de mémoire (122) conservant une clef cryptographique et **en ce que** les moyens sécurisés (110, 111, 122, 123, 190, 275, 280) pour modifier au moins un dit programme mettent en oeuvre une clef cryptographique correspondant à ladite clef cryptographique mémorisée.

6. Entité électronique portable (100) selon l'une quelconque des revendications 1 à 5, **caractérisée en ce que** le programme apte à être exécuté automatiquement comporte des moyens d'accès à un serveur distant (190), par l'intermédiaire d'un réseau (170).

7. Entité électronique portable (100) selon l'une quelconque des revendications 1 à 6, **caractérisée en ce qu'**elle comporte une interface physique (130) avec la station hôte (150) conforme à la spécification USB, et est apte à communiquer avec la station hôte selon un protocole conforme à la spécification USB pour obtenir des données de modification dudit programme.

8. Procédé de mise à jour d'un programme à lancement automatique d'une entité électronique portable (100), **caractérisé en ce qu'**il comporte :
- une étape (205) de connexion de ladite entité à une station hôte (150),
- une étape (235, 250) d'exécution, sur ladite station hôte d'un programme conservé par ladite entité et apte à être exécuté automatiquement, sur ladite station hôte, sur connexion de ladite entité à ladite station hôte et
- une étape (260-285, 287-297, 360-395) de modification sécurisée dudit programme
et dans lequel, au cours de l'étape (205) de connexion, on provoque une première énumération (210, 220), au cours de laquelle ladite entité (100) s'identifie et émule un lecteur d'une mémoire morte dans laquelle se trouve le fichier (121) dudit programme et, au cours de l'étape (260-285, 287-297, 360-395) de modification sécurisée, on provoque une deuxième énumération (210, 220, 250, 297), au cours de laquelle ladite entité s'identifie et émule un lecteur de mémoire non volatile réinscriptible dans laquelle se trouve le fichier dudit programme.

9. Procédé selon la revendication 8, **caractérisé en ce que**, au cours de l'étape (260-285, 287-297, 360-395) de modification sécurisée, on provoque l'arrêt (291, 380) de fonctionnement de l'entité et son redémarrage avant de provoquer la deuxième énumération (210, 220, 250, 297).

10. Procédé selon la revendication 9, **caractérisé en ce que**, au cours de l'étape (260-285, 287-297, 360-395) de modification sécurisée, on inscrit, dans une zone de mémoire (123) réservée de ladite entité (100), une instruction provoquant l'identification (295, 297, 315, 395) de ladite entité à une mémoire non volatile réinscriptible lors du redémarrage (205, 293, 385) de ladite entité.

11. Procédé selon l'une quelconque des revendications 8 à 10, **caractérisé en ce que**, au cours de l'étape (260-285, 287-297, 360-395) de modification sécurisée, on authentifie une version modifiée dudit programme.

12. Procédé selon la revendication 11, **caractérisé en ce que**, au cours de l'étape (260-285, 287-297, 360-395) de modification sécurisée, on met en oeuvre une clef cryptographique (275, 280) correspondant à une clef cryptographique mémorisée dans ladite entité (100).

13. Procédé selon l'une quelconque des revendications 8 à 12, **caractérisé en ce que**, au cours de l'étape (260-285, 287-297, 360-395) de modification sécurisée, on accède à un serveur distant (190), par l'intermédiaire d'un réseau (170).

## Patentansprüche

1. Tragbare elektronische Einheit (100), **dadurch gekennzeichnet, dass** sie Folgendes umfasst:
- Mittel (130) zum Herstellen einer Verbindung von der Einheit zu einer Host-Station (150),
- einen Speicher (120), der ein Programm (121) enthält, das imstande ist, auf der Host-Station bei Verbindung von der Einheit zur Host-Station automatisch ausgeführt zu werden, und
- gesicherte Mittel (110, 111, 122, 123, 190), um das Programm zu ändern, wobei die Mittel (130) zum Herstellen einer Verbindung angepasst sind, um bei Verbindung von der Einheit zur Host-Station (150) eine erste Aufzählung (210, 220) auszulösen, bei der die Einheit identifiziert wird und einen Leser eines Nur-Lese-Speichers emuliert, in dem sich die Datei (121) des Programms befindet, und die gesicherten Mittel (110, 111, 122, 123, 190) angepasst sind, um zum Ändern des Programms eine zweite Aufzählung (210, 220, 250, 297) auszulösen, bei der die Einheit identifiziert wird und einen Leser eines wiederbeschreibbaren nichtflüchtigen Speichers emuliert, in dem sich die Datei des Programms befindet.

2. Tragbare elektronische Einheit (100) nach Anspruch 1, **dadurch gekennzeichnet, dass** die gesicherten Mittel (110, 111, 122, 123, 190) angepasst sind, um zum Ändern des Programms das Ausschalten (291, 380) der Einheit und deren Neustart auszulösen, bevor die zweite Aufzählung (210, 220, 250, 297) ausgelöst wird.

3. Tragbare elektronische Einheit (100) nach Anspruch 2, **dadurch gekennzeichnet, dass** die gesicherten Mittel (110, 111, 122, 123, 190) angepasst sind, um in einen reservierten Speicherbereich (123) der Einheit eine Anweisung einzuschreiben (289, 375), die die Identifikation (295, 297, 315, 395) der Einheit mit einem wiederbeschreibbaren nichtflüchtigen Speicher beim Neustart (205, 293, 385) der Einheit auslöst.

4. Tragbare elektronische Einheit (100) nach einem der Ansprüche 1 bis 3, **dadurch gekennzeichnet, dass** die gesicherten Mittel (110, 111, 122, 123, 190) Mittel zur Authentifizierung (110, 111, 122, 280) einer geänderten Version des Programms umfassen.

5. Tragbare elektronische Einheit (100) nach Anspruch 4, **dadurch gekennzeichnet, dass** sie einen Speicherbereich (122) umfasst, der einen kryptographischen Schlüssel enthält, und dadurch, dass die gesicherten Mittel (110, 111, 122, 123, 190, 275, 280) zum Ändern mindestens eines Programms einen kryptographischen Schlüssel anwenden, der dem gespeicherten kryptographischen Schlüssel entspricht.

6. Tragbare elektronische Einheit (100) nach einem der Ansprüche 1 bis 5, **dadurch gekennzeichnet, dass** das Programm, das imstande ist, automatisch ausgeführt zu werden, Mittel für den Zugriff auf einen entfernten Server (190) über ein Netzwerk (170) umfasst.

7. Tragbare elektronische Einheit (100) nach einem der Ansprüche 1 bis 6, **dadurch gekennzeichnet, dass** sie eine physische Schnittstelle (130) mit der Host-Station (150) gemäß der USB-Spezifikation umfasst, und imstande ist, mit der Host-Station über ein Protokoll gemäß der USB-Spezifikation zu kommunizieren, um Änderungsdaten des Programms zu erhalten.

8. Verfahren zur Aktualisierung eines automatisch startenden Programms einer tragbaren elektronischen Einheit (100), **dadurch gekennzeichnet, dass** es Folgendes umfasst:
- eine Phase (205) des Verbindens der Einheit mit einer Host-Station (150),
- eine Phase (235, 250) des Ausführens eines Programms, das von der Einheit gespeichert und imstande ist, automatisch ausgeführt zu werden, auf der Host-Station bei Verbindung von der Einheit zur Host-Station und
- eine Phase (260-285, 287-297, 360-395) des gesicherten Änderns des Programms und wobei, während der Phase (205) des Verbindens eine erste Aufzählung (210, 220) ausgelöst wird, während der die Einheit (100) identifiziert wird und einen Leser eines Nur-Lese-Speichers emuliert, in dem sich die Datei (121) des Programms befindet, und, während der Phase (260-285, 287-297, 360-395) des gesicherten Änderns eine zweite Aufzählung (210, 220, 250, 297) ausgelöst wird, während der die Einheit identifiziert wird und einen Leser eines wiederbeschreibbaren nichtflüchtigen Speichers emuliert, in dem sich die Datei des Programms befindet.

9. Verfahren nach Anspruch 8, **dadurch gekennzeichnet, dass** während der Phase (260-285, 287-297, 360-395) des gesicherten Änderns das Ausschalten (291, 380) der Einheit und deren Neustart ausgelöst werden, bevor die zweite Aufzählung (210, 220, 250, 297) ausgelöst wird.

10. Verfahren nach Anspruch 9, **dadurch gekennzeichnet, dass** während der Phase (260-285, 287-297, 360-395) des gesicherten Änderns in einen reservierten Speicherbereich (123) der Einheit (100) eine Anweisung eingeschrieben wird, die die Identifikation (295, 297, 315, 395) der Einheit mit einem wiederbeschreibbaren nichtflüchtigen Speicher beim Neustart (205, 293, 385) der Einheit auslöst.

11. Verfahren nach einem der Ansprüche 8 bis 10, **dadurch gekennzeichnet, dass** während der Phase (260-285, 287-297, 360-395) des gesicherten Änderns eine geänderte Version des Programms authentifiziert wird.

12. Verfahren nach Anspruch 11, **dadurch gekennzeichnet, dass** während der Phase (260-285, 287-297, 360-395) des gesicherten Änderns ein kryptographischer Schlüssel (275, 280) angewendet wird, der einem kryptographischen Schlüssel entspricht, der in der Einheit (100) gespeichert ist.

13. Verfahren nach einem der Ansprüche 8 bis 12, **dadurch gekennzeichnet, dass** während der Phase (260-285, 287-297, 360-395) des gesicherten Änderns auf einen entfernten Server (190) über ein Netzwerk (170) zugegriffen wird.

## Claims

1. Portable electronic entity (100), **characterised in that** it includes:
- means (130) for connecting said entity to a host station (150),
- a memory (120) storing a program (121) adapted to be executed automatically in said host station on connection of said entity to said host station, and
- secure means (110, 111, 122, 123, 190) for modifying said program,
the connection means (130) being adapted to provoke a first enumeration (210, 220) on connection of said entity to said host station (150), during which said entity is identified and emulates a reader for a read-only memory containing the file (121) of said program and the secure means (110, 111, 122, 123, 190) are adapted, in order to modify said program, to provoke a second enumeration (210, 220, 250, 297), during which said entity is identified and emulates a reader for a rewritable non-volatile memory containing the file of said program.

2. Portable electronic entity (100) according to claim 1, **characterised in that** the secure means (110, 111, 122, 123, 190) are adapted, in order to modify said program, to provoke stopping (291, 380) and restarting of the operation of the entity before provoking the second enumeration (210, 220, 250, 297).

3. Portable electronic entity (100) according to claim 2, **characterised in that** the secure means (110, 111, 122, 123, 190) are adapted to write (289, 375) into a reserved memory area (123) of said entity an instruction provoking the identification (295, 297, 315, 395) of said entity as a rewritable non-volatile memory when said entity is restarted (205, 293, 385).

4. Portable electronic entity (100) according to any one of claims 1 to 3, **characterised in that** the secure means (110, 111, 122, 123, 190) include means for authenticating (110, 111, 122, 280) a modified version of said program.

5. Portable electronic entity (100) according to claim 4, **characterised in that** it includes a memory area (122) storing a cryptographic key and **in that** the secure means (110, 111, 122, 123, 190, 275, 280) for modifying at least one said program use a cryptographic key corresponding to said stored cryptographic key.

6. Portable electronic entity (100) according to any one of claims 1 to 5, **characterised in that** the program adapted to be executed automatically includes means for accessing a remote server (190) via a network (170).

7. Portable electronic entity (100) according to any one of claims 1 to 6, **characterised in that** it includes a physical interface (130) with the host station (150) conforming to the USB specification, and is adapted to communicate with the host station using a protocol conforming to the USB specification to obtain modification data of said program.

8. Method for updating an autorun program of a portable electronic entity (100), **characterised in that** it includes:
- a step (205) of connecting said entity to a host station (150),
- a step (235, 250) of executing in said host station a program stored by said entity and adapted to be executed automatically in said host station on connection of said entity to said host station, and
- a step (260-285, 287-297, 360-395) of secure modification of said program,
and in which during the connection step (205), a first enumeration (210, 220) is provoked, during which said entity (100) is identified and emulates a reader for a read-only memory containing the file (121) of said program and, during the secure modification step (260-285, 287-297, 360-395), a second enumeration (210, 220, 250, 297) is provoked, during which said entity is identified and emulates a reader for a rewritable non-volatile memory containing the file of said program.

9. Method according to claim 8, **characterised in that**, during the secure modification step (260-285, 287-297, 360-395), operation of the entity is stopped (291, 380) and restarted before provoking the second enumeration (210, 220, 250, 297).

10. Method according to claim 9, **characterised in that**, during the secure modification step (260-285, 287-297, 360-395), there is written into a reserved memory area (123) of said entity (100) an instruction provoking the identification (295, 297, 315, 395) of said entity as a rewritable non-volatile memory when said entity is restarted (205, 293, 385).

11. Method according to any one of claims 8 to 10, **characterised in that**, during the secure modification step (260-285, 287-297, 360-395), a modified version of said program is authenticated.

12. Method according to claim 11, **characterised in that**, during the secure modification step (260-285, 287-297, 360-395), a cryptographic key (275, 280) is used corresponding to a cryptographic key stored in said entity (100).

13. Method according to any one of claims 8 to 12, **characterised in that**, during the secure modification step (260-285, 287-297, 360-395), a remote server (190) is accessed via a network (170).
